# EUROPEAN PATENT APPLICATION

(11) **EP 4 117 271 A1**
(43) Date of publication of application: **11.01.2023**
(21) Application number: 21764718.9
(22) Date of filing: 26.01.2021
(51) Int. Cl.: H04N 5/232, E04G 21/14, G03B 15/00, G06Q 50/08

(54) **IMAGE CAPTURING PROGRAM**

(30) Priority: 03.03.2020 JP 2020035936
(71) Applicant: Daikin Industries, Ltd., Osaka-shi, Osaka 530-8323 (JP)
(72) Inventor: KUKITA, Tomomi, Osaka-shi, Osaka 530-8323 (JP); SATOU, Daisuke, Osaka-shi, Osaka 530-8323 (JP)
(74) Representative: Goddar, Heinz J.
(86) International application number: PCT/JP2021/002665
(87) International publication number: WO 2021/176889

(57) **Abstract**

The present disclosure makes it easy to take construction photos. A program according to one embodiment of the present disclosure causes a terminal to function as: an information acquiring part configured to acquire installation information including at least a place of installation of a construction object, and construction information linked with the installation information; an activation part configured to activate a camera function of the terminal when the installation information is selected; and an adding part configured to add the construction information linked with the selected installation information to an image of the construction object taken by the camera function.

## Description

### Technical Field

The present disclosure relates to a photographing program.

### Background Art

Conventionally, when equipment such as an air conditioner is installed, construction photos are taken at the site of construction. The workers take photos of the equipment such as an air conditioner together with a construction blackboard on which information about the construction is hand-written. In recent years, however, more photos are taken by using a small electronic blackboard (also referred to as a "small blackboard") (see Patent Document 1).

### Related-Art Document

### Patent Document

Patent Document 1: Japanese Unexamined Patent Application Publication No. 2016-171454

### Summary of the Invention

### Problem to be Solved by the Invention

However, according to Patent Document 1, when the worker takes a photo, the worker has also to input information in the electronic small blackboard and save it with the photographed image, which is troublesome.

It is therefore an object of this disclosure to make it easy to take construction photos.

### Means for Solving Problem

The program according to the first aspect of the present disclosure causes a terminal to function as: an information acquiring part configured to acquire installation information including at least a place of installation of a construction object, and construction information linked with the installation information; an activation part configured to activate a camera function of the terminal when the installation information is selected; and an adding part configured to add the construction information linked with the selected installation information to an image of the construction object taken by the camera function.

According to the first aspect of the present disclosure, construction photos can be taken easily, and appropriate construction information can be added to the images of construction photos.

Also, based upon the program of the first aspect, according to a second aspect of the present disclosure, the place of installation is represented as a location on a plot plan.

According to the second aspect of the present disclosure, the photographer has only to select a desired location on a plot plan to take a photo by the camera function and add the construction information linked with that location to the image.

Also, based upon the program of the first aspect, according to a third aspect of the present disclosure, the place of installation is represented by text.

According to the third aspect of the present disclosure, the photographer has only to select desired text to take a photo by the camera function and add the construction information linked with that text to the image.

Also, based upon the program of any one of the first aspect to the third aspect, according to a fourth aspect of the present disclosure, when the installation information is selected, the information acquiring part acquires the construction information linked with the selected installation information.

According to the fourth aspect of the present disclosure, only the construction information in which the installation information is selected is acquired, so that the amount of data to send and receive can be reduced.

Also, based upon the program of any one of the first aspect to the fourth aspect, according to a fifth aspect of the present disclosure, the program further causes the terminal to function as a display part that is configured to display at least part of the construction information on a screen of the camera function in a changeable manner.

According to the fifth aspect of the present disclosure, the photographer can visually identify and change at least part of the construction information linked with the selected installation information.

Also, based upon the program of the fifth aspect, according to a sixth aspect of the present disclosure, the display part displays the construction information at a location on the screen determined based on whether or not the terminal needs to be operated.

According to the sixth aspect of the present disclosure, the photographer can operate the terminal with ease while the construction information is displayed.

Also, based upon the program of any one of the first aspect to the sixth aspect, according to a seventh aspect of the present disclosure, the program further causes the terminal to function as an image transmission part configured to send an image of the construction object, which is taken by the camera function and to which the construction information is added by the adding part, to the server, as data for use in a construction report.

According to the seventh aspect of the present disclosure, the image, to which the construction information is added, can be saved in the server and used in a construction report.

Also, based upon the program of the seventh aspect, according to an eighth aspect of the present disclosure, the program further causes the terminal to function as an evaluation result receiving part configured to receive an evaluation result determined with regard to the image saved in the server.

According to the eighth aspect of the present disclosure, the photographer can know the suitability of the photographed image.

Also, based upon the program of any one of the first aspect to the seventh aspect, according to a ninth aspect of the present disclosure, the information acquiring part acquires the construction information registered with the server in advance, from the server.

According to the ninth aspect of the present disclosure, the construction information registrant can register in advance the construction information that the construction information registrant wants to add to the image.

Also, based upon the program of any one of the first aspect to the ninth aspect, according to a tenth aspect of the present disclosure, the construction object is equipment, and the program further causes the terminal to function as a camera function control part that is configured to control the camera function to identify the equipment and place a focus on the equipment.

According to the tenth aspect of the present disclosure, the photographer does not need to perform any operation to place a focus on the equipment.

Also, based upon the program of any one of the first aspect to the ninth aspect, according to an eleventh aspect of the present disclosure, the construction object is equipment, and the program further causes the terminal to function as a camera function control part that is configured to control the camera function to display a line for determining a location of the equipment on a screen of the camera function.

According to the eleventh aspect of the present disclosure, the photographer does not need to perform any operation to determine the location of the equipment on the camera function screen.

Also, based upon the program of any one of the first aspect to the ninth aspect, according to a twelfth aspect of the present disclosure, the construction object is equipment, and the program further causes the terminal to function as a camera function control part that is configured to control the camera function to identify and start photographing the equipment.

According to the twelfth aspect of the present disclosure, the photographer does not need to perform any operation to start photographing the equipment.

### Brief Description of the Drawings

FIG. 1 is a diagram showing an overall configuration according to one embodiment of the present disclosure;
FIG. 2 is a functional block diagram of a photographing terminal according to one embodiment of the present disclosure;
FIG. 3 is a functional block diagram of a registration terminal according to one embodiment of the present disclosure;
FIG. 4 is a functional block diagram of an evaluation terminal according to one embodiment of the present disclosure;
FIG. 5 is a functional block diagram of a server according to one embodiment of the present disclosure;
FIG. 6 is an example of construction information and installation information according to one embodiment of the present disclosure;
FIG. 7 is a diagram for explaining the linking between construction information and installation information according to one embodiment of the present disclosure;
FIG. 8 is a transition diagram of a screen displayed on the photographing terminal according to one embodiment of the present disclosure;
FIG. 9 is a sequence diagram of a registration process, a photographing process, and an evaluation process according to one embodiment of the present disclosure;
FIG. 10 is a flowchart of the photographing process according to one embodiment of the present disclosure; and
FIG. 11 is a diagram showing a hardware configuration of the photographing terminal, the server, the registration terminal, and the evaluation terminal according to one embodiment of the present disclosure.

### Embodiment for Carrying Out the Invention

Hereinafter, embodiments of the present disclosure will be described with reference to the accompanying drawings.

### <Explanation of terms>

"Equipment" is any type of equipment that is installed at any place. For example, equipment refers to the indoor unit of an air conditioner, the outdoor unit of an air conditioner, an air cleaner, and so forth.

Note that, although a case will be described in this specification where the object that is subject to construction or that is installed (hereinafter also referred to as the "construction object") is equipment such as an air conditioner, the present disclosure may be applied to any unspecified construction object.

### <Overall configuration>

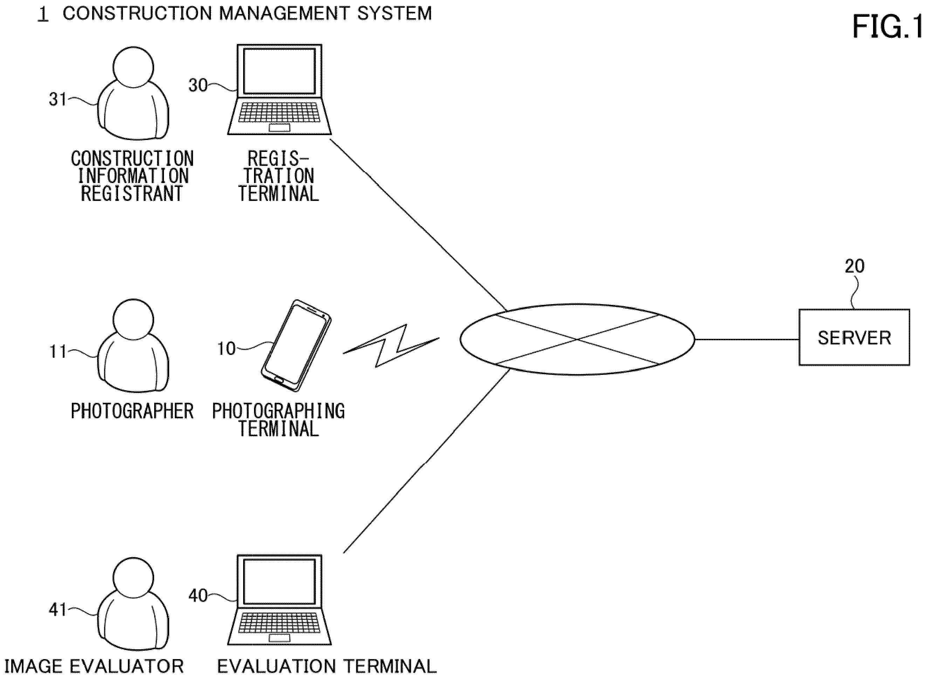

FIG. 1 is a diagram showing an overall configuration of one embodiment of the present disclosure. A construction management system 1 can include a photographing terminal 10, a server 20, a registration terminal 30, and an evaluation terminal 40. The server 20 is communicably connected with the photographing terminal 10, the registration terminal 30, and the evaluation terminal 40, via an unspecified network. Each will be described below.

### <<Photographing terminal 10>>

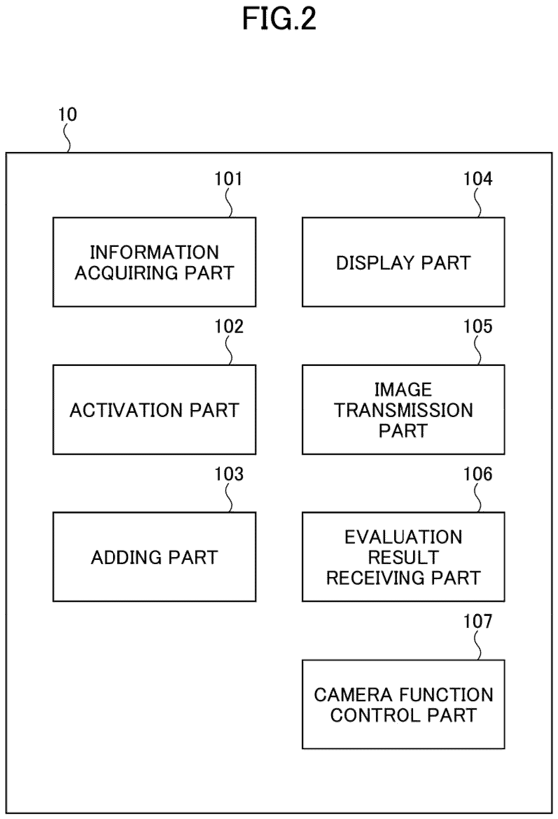

The photographing terminal 10 is a terminal for taking a photo of a construction object (for example, equipment such as an air conditioner). The photographing terminal 10 has a camera function. For example, the photographing terminal 10 is a smartphone, a tablet, and the like. The photographing terminal 10 acquires installation information of equipment such as an air conditioner and construction information linked with that installation information. Also, when installation information is selected, the camera function of the photographing terminal 10 is activated. Also, the photographing terminal 10 adds construction information linked with the selected installation information, to the image of the construction object taken by the camera function. Note that the person who operates the photographing terminal 10 will be hereinafter referred to as a "photographer 11." Later, the photographing terminal 10 will be described in detail with reference to FIG. 2.

### <<Registration terminal 30>>

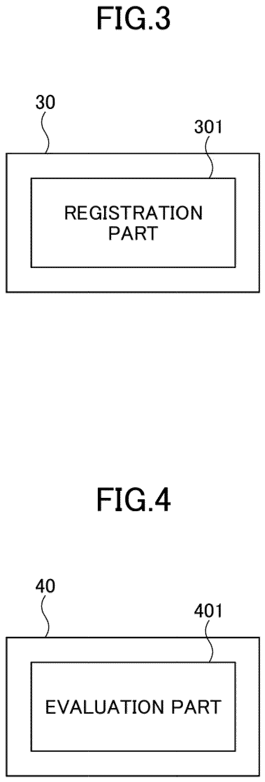

The registration terminal 30 is a terminal for registering installation information of equipment such as an air conditioner with the server 20 in advance (that is, before the photographer 11 takes photos). Also, the registration terminal 30 is a terminal for linking construction information to the installation information of equipment such as an air conditioner. For example, the registration terminal 30 is a personal computer or the like. Note that the person who operates the registration terminal 30 will be hereinafter referred to as a "construction information registrant 31." Later, the registration terminal 30 will be described in detail with reference to FIG. 3.

### <<Evaluation terminal 40>>

The evaluation terminal 40 is a terminal for evaluating an image that is taken by the photographing terminal 10 and stored in the server 20. For example, the evaluation terminal 40 is a personal computer or the like. Note that the person who operates the evaluation terminal 40 will be hereinafter referred to as an "image evaluator 41." Later, the evaluation terminal 40 will be described in detail with reference to FIG. 4.

### <<Server 20>>

The server 20 is one or more computers. The memory device of the server 20 stores installation information of equipment such as an air conditioner, and construction information linked with that installation information. Also, images taken by the photographing terminal 10 are stored in a memory device of the server 20.

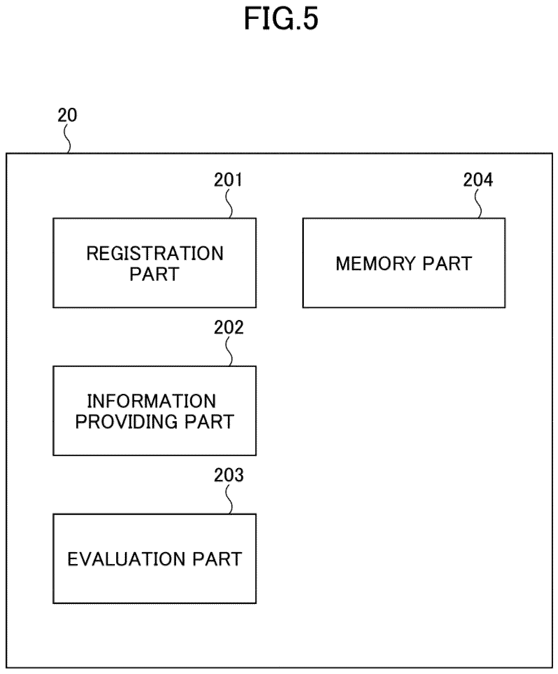

The server 20 receives installation information of equipment such as an air conditioner from the registration terminal 30. Also, the server 20 sends the installation information of equipment such as an air conditioner and the construction information linked with that installation information, to the photographing terminal 10. Later, the server 20 will be described in detail with reference to FIG. 5.

### <Functional blocks of photographing terminal 10>

FIG. 2 is a functional block diagram of the photographing terminal 10 according to one embodiment of the present disclosure. The photographing terminal 10 includes an information acquiring part 101, an activation part 102, and an adding part 103. Note that the photographing terminal 10 may be further provided with a display part 104, an image transmission part 105, an evaluation result receiving part 106, and a camera function control part 107. Also, the photographing terminal 10 functions as an information acquiring part 101, an activation part 102, and an adding part 103, by executing a program. Note that the photographing terminal 10 can be configured to further function as a display part 104, an image transmission part 105, an evaluation result receiving part 106, and a camera function control part 107, by executing a program. Each will be described below.

The information acquiring part 101 acquires equipment installation information and construction information linked with the installation information. For example, the information acquiring part 101 receives the equipment installation information and the construction information linked with the installation information from the server 20.

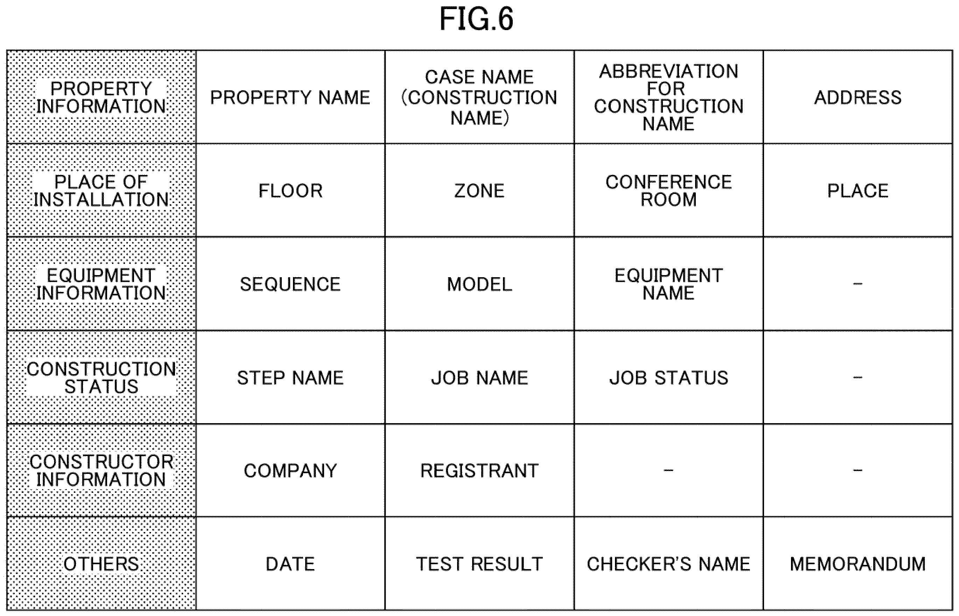

Here, the construction information and the installation information will be described. The construction information is information related to the construction of equipment such as an air conditioner. The construction information is linked with installation information. Later, the construction information will be described in detail with reference to FIG. 6.

The installation information at least includes information that indicates the place where equipment such as an air conditioner is installed (the place of installation). For example, a plot plan (for example, a construction drawing of the property (for example, the building) where the equipment is installed) is provided, and the place of installation is indicated by a location (for example, an icon) on the plot plan (that is, represented by a location on the plot plan). Alternatively, the place of installation is indicated by text (that is, represented by text). Later, the installation information will be described in detail with reference to FIG. 6.

The activation part 102 determines whether or not installation information displayed on a display of the photographing terminal 10 or the like is selected. For example, the activation part 102 determines whether or not any of the locations (for example, icons) on the plot plan displayed on the display of the photographing terminal 10 or the like is selected (for example, tapped on). Alternatively, the activation part 102 determines whether or not any of the text displayed on the display of the photographing terminal 10 or the like is selected.

In the event installation information is selected, the activation part 102 activates the camera function of the photographing terminal 10. For example, in the event installation information is selected, the activation part 102 makes the camera built in the photographing terminal 10 or the camera connected to the photographing terminal 10 ready to take a photo of the construction object (for example, equipment such as an air conditioner).

The adding part 103 determines whether or not a photo of the construction object has been taken (that is, whether or not the shutter has been pressed) by the camera function activated by the activation part 102. The adding part 103 adds the construction information linked with the installation information selected by the photographer 11, to the image of the construction object taken by the camera function activated by the activation part 102. For example, the adding part 103 adds the construction information as the image's metadata.

The display part 104 displays the installation information acquired by the information acquiring part 101 on the display of the photographing terminal 10 or the like. For example, the display part 104 displays a screen on which the place where the equipment is installed is indicated by a location (for example, an icon) on a plot plan. Alternatively, the display part 104 displays a screen on which the place where the equipment is installed is indicated by text.

Also, the display part 104 displays at least part of the construction information linked with the installation information selected by the photographer 11, on a screen (that is, a photographing screen) of the camera function activated by the activation part 102, in a changeable manner.

Also, the display part 104 displays the construction information linked with the installation information selected by the photographer 11 at a location determined based on whether or not the photographing terminal 10 needs to be operated, on a screen (that is, a photographing screen) of the camera function activated by the activation part 102. For example, the construction information is displayed at a location where the photographer 11 can operate the construction information with ease, based on information as to whether the photographer 11 is right-handed or left-handed, which is registered in advance. For example, an item of construction information that is to be operated in the currently-ongoing task is displayed at a location where the photographer 11 can operate the item with ease. On the other hand, an item of construction information that is not operated in the currently-ongoing task may be hidden on a temporary basis. For example, based on the operation log of the photographer 11, an item of construction information that is operated frequently is displayed at a location where the photographer 11 can operate the item with ease, and an item of construction information that is operation less frequency is displayed at a location where the photographer 11 can operate the item less easily. For example, an item of construction information that should not be operated easily (for example, an important button) is displayed at a location where the photographer 11 has difficulty operating the item.

The image transmission part 105 sends the image, which has been taken by the camera function of the photographing terminal 10, and to which the construction information has been added by the adding part 103, to the server 20.

The evaluation result receiving part 106 receives the result of evaluation rendered with regard to the image stored in the server 20.

The camera function control part 107 controls the camera function so as to identify the equipment such as an air conditioner and place a focus on the equipment (autofocus). Also, the camera function control part 107 controls the camera function so as to display lines (auxiliary lines) for determining the location of the equipment on the camera function screen. Also, the camera function control part 107 controls the camera function so as to identify the equipment such as an air conditioner and start taking photographs.

Also, the camera function control part 107 can control the camera function such that the image of the equipment the camera function is about to photograph is compared against the image database of the equipment such as an air conditioner, and, if the equipment the camera function is about to photograph is not the one that is to be photographed, an warning is issued to the photographer 11. Also, the camera function control part 107 can control the camera function such that, when an image taken by the camera function is blurred, the photographer 11 is prompted to take that photo again.

### <Functional block of registration terminal 30>

FIG. 3 is a functional block diagram of the registration terminal 30 according to one embodiment of the present disclosure. The registration terminal 30 includes a registration part 301. Also, the registration terminal 30 functions as a registration part 301 by executing a program. Below, this will be described in detail.

The registration part 301 sends construction information of the equipment to the server 20. For example, the registration part 301 sends construction information (for example, construction status, constructor information, etc.) input by the construction work information registrant 31, to the server 20.

Also, the registration part 301 sends the correspondence between construction information and installation information to the server 20.

In the event the equipment's installation information is indicated by a location on a plot plan, the registration part 301 sends, to the server 20, the correspondence between each construction information and each location on the plot plan indicating a place where the equipment is installed, specified by the construction information registrant 31.

In the event the equipment's installation information is indicated by text, the registration part 301 sends, to the server 20, the correspondence between each construction information and each text indicating a place where the equipment is installed, specified by the construction information registrant 31.

### <Functional block of evaluation terminal 40>

FIG. 4 is a functional block diagram of the evaluation terminal 40 according to one embodiment of the present disclosure. The evaluation terminal 40 includes an evaluation part 401. Also, the evaluation terminal 40 functions as an evaluation part 401 by executing a program. Below, this will be described in detail.

The evaluation part 401 evaluates the images taken by the photographing terminal 10 stored in the server 20. The evaluation part 401 receives an image stored in the memory part 204 of the server 20, from the server 20. Also, the evaluation part 401 receives as input an evaluation result of the image received from the server 20, rendered by the image evaluator 41. Also, the evaluation part 401 sends the evaluation result of the image to the server 20.

### <Functional block of server 20>

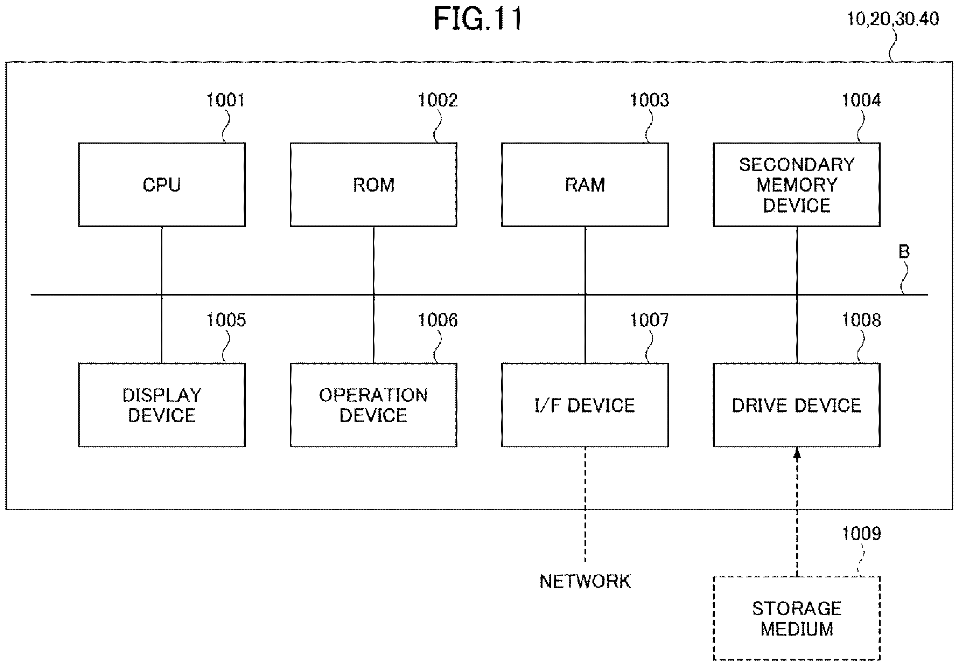

FIG. 5 is a functional block diagram of the server 20 according to one embodiment of the present disclosure. The server 20 includes a registration part 201, an information providing part 202, an evaluation part 203, and a memory part 204. Also, the server 20 functions as the registration part 201, the information providing part 202, and the evaluation part 203, by executing a program. Also, the memory part 204 is implemented by a memory device of the server 20 (ROM 1002 or the like in FIG. 11). Each will be described below.

The registration part 201 receives the construction information of the equipment from the registration terminal 30, and stores the received construction information in the memory part 204.

Also, the registration part 201 receives the correspondence between construction information and installation information from the registration terminal 30, and stores the received correspondence between construction information and installation information in the memory part 204.

In the event the installation information of the equipment is indicated by a location on a plot plan, the registration part 201 receives the correspondence between each construction information and each location on the plot plan indicating a place where the equipment is installed, and stores the received correspondence in the memory part 204.

In the event the installation information of the equipment is indicated by text, the registration part 201 receives the correspondence between each construction information and each text indicating a place where the equipment is installed, and stores the received correspondence in the memory part 204.

Also, the registration part 201 receives an image taken by the photographing terminal 10 from the photographing terminal 10, and stores the received image in the memory part 204.

The information providing part 202 sends equipment installation information and construction information linked with the installation information, to the photographing terminal 10. For example, the information providing part 202 sends installation information and construction information with regard to property information (for example, a property name, a case name (construction name), etc.) specified from the photographing terminal 10, to the photographing terminal 10.

The evaluation part 203 sends the image stored in the memory part 204 of the server 20, to the evaluation terminal 40. Also, the evaluation part 203 receives the evaluation result of the image from the evaluation terminal 40. Also, the evaluation part 203 reports the evaluation result (for example, a request for a retake) to the photographing terminal 10.

The memory part 204 the stores installation information of equipment such as an air conditioner and construction information linked with the installation information. Also, images taken by the photographing terminal 10 are stored in the memory part 204. For example, images taken by the photographing terminal 10 are used in a construction report.

FIG. 6 shows an example of construction information and installation information according to one embodiment of the present disclosure. For example, the information of FIG. 6, including "property information," "place of installation," "equipment information," "construction status," "constructor information," and "others" is managed per property (for example, building) where the equipment is installed. As mentioned above, the installation information includes at least a "place of installation." Furthermore, the installation information may include "equipment information." The construction information can include, for example, "construction status" and "constructor information."

"Property information" is information about the property (for example, the building) in which the equipment is installed. "Property information" includes, for example, the property name, the case name (construction name), an abbreviation for the construction name, and the property's address information.

"Place of installation" is information about the place where the equipment is installed. "Place of installation" includes, for example, information about the floor in the property where the equipment is installed, the zone, the room such as a conference room, and the place in the room.

"Equipment information" is information about the equipment. "Equipment information" includes, for example, information about the equipment's system, the equipment's model, and the equipment's name. Note that the photographer 11 may acquire the equipment's name from the QR code (registered trademark) of the equipment, and link it to an image taken by the photographing terminal 10.

"Construction status" is information about the status of construction. For example, "construction status" is information about the name of the process, the name of the task, and the status of the task.

"Constructor information" is information about the constructor. For example, "constructor information" is information about the company and the registrant (construction information registrant 31).

"Others" is information other than the above. For example, "Others" may include information about the date, the test result, the checker's name, and memorandum.

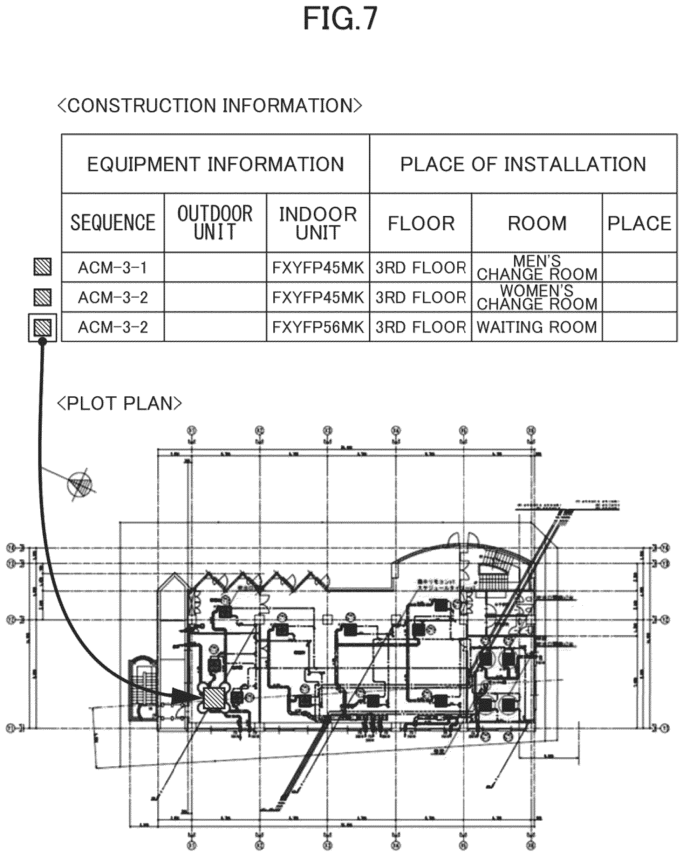

FIG. 7 is a diagram for explaining the linking between construction information and installation information according to one embodiment of the present disclosure. The upper part of FIG. 7 shows an example of construction information, and the lower part of FIG. 7 shows an example of a plot plan. For example, the plot plan is a construction drawing of the property (for example, the building, etc.) where the equipment such as an air conditioner is installed.

By using the registration terminal 30, the construction information registrant 31 links between the construction information in the upper part of FIG. 7 and the locations on the plot plan of the lower part of FIG. 7 (that is, the places where the equipment such as an air conditioner is installed). For example, the construction information registrant 31 can link between the construction information and the locations on the plot plan by dragging and dropping the icons and the like that are linked with each construction information to the locations on the plot plan (that is, places where the equipment such as an air conditioner is installed).

Note that, when the places where the equipment is installed are indicated by text, the construction information registrant 31 links each text (for example, "Men's change room on the 3rd floor," "Women's change room on the 3rd floor," "Waiting room on the 3rd floor," etc.) with the construction information.

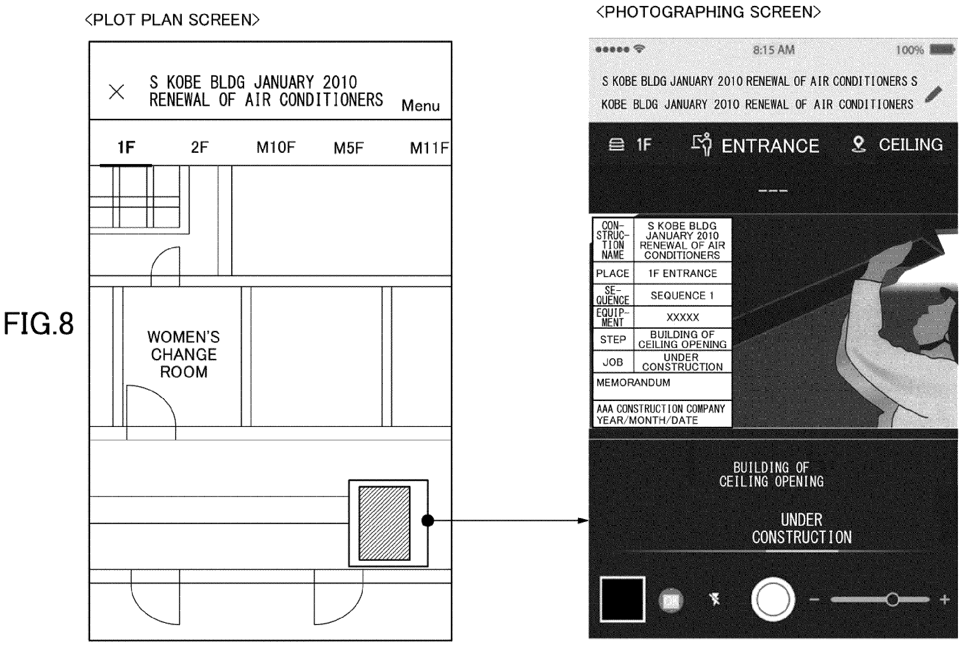

FIG. 8 is a transition diagram of a screen that is displayed on the photographing terminal 10 according to one embodiment of the present disclosure. The left part of FIG. 8 is an example of a screen on which a location on a plot plan indicates a place where the equipment is installed. The right part of FIG. 8 is an example of the screen of the camera function of the photographing terminal 10.

When the photographer 11 selects (for example, taps on) a desired location on the screen of the left part of FIG. 8, the camera function of the photographing terminal 10 is activated, and the screen transitions to the screen of the right part of FIG. 8. As shown in the right part of FIG. 8, at least part of the construction information is displayed on the camera function screen in a changeable manner. When the photographer 11 takes a photo using the camera function, the construction information linked with the location selected in the left screen in FIG. 8 is added to the image taken.

Note that, if the place where the equipment is installed is indicated by text, when the photographer 11 selects desired text, the camera function of the photographing terminal 10 is activated, and the screen transitions to the screen shown in the left part of FIG. 8.

### <Processing method>

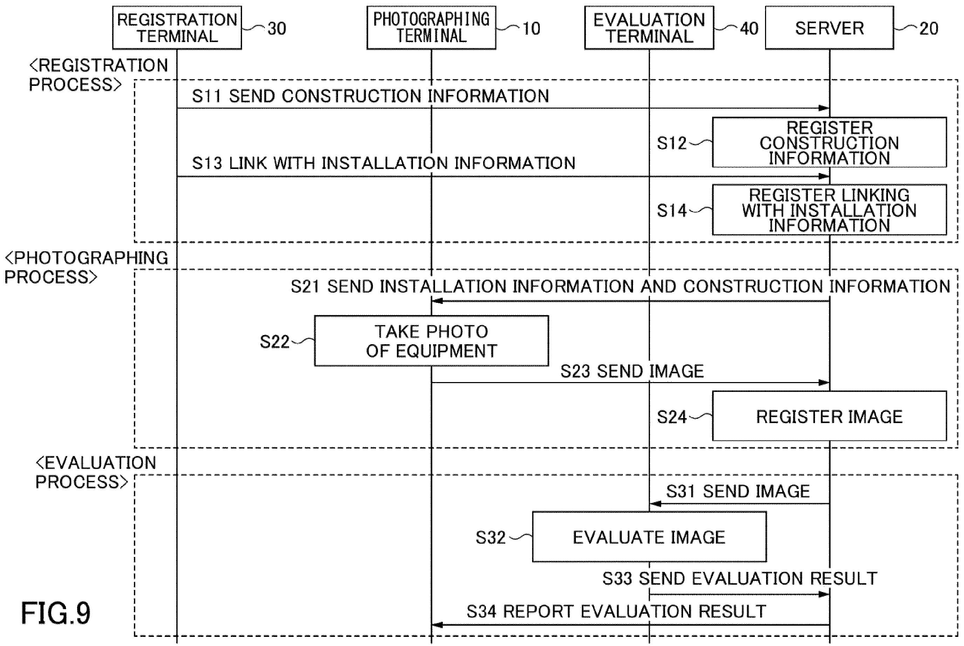

FIG. 9 is a sequence diagram of the registration process, the photographing process, and the evaluation process according to one embodiment of the present disclosure. Hereinafter, the registration process (steps 11 to 14), the photographing process (steps 21 to 24), and the evaluation process (steps 31 to 34) will be described separately.

### <<Registration process>>

In step 11 (S11), the registration terminal 30 sends the construction information of equipment to the server 20. For example, the registration terminal 30 sends the construction information (for example, the construction status, constructor information, etc.) input by the construction information registrant 31, to the server 20.

In step 12 (S12), the server 20 stores the construction information received in S11, in the memory part 204 of the server 20.

In step 13 (S13), the registration terminal 30 sends the correspondence between construction information and installation information to the server 20.

In the event the equipment's installation information is indicated by locations on a plot plan, the registration terminal 30 sends, to the server 20, the correspondence between the construction information and the locations on the plot plan indicating the places where the equipment is installed, specified by the construction information registrant 31.

In the event the equipment's installation information is indicated by text, the registration terminal 30 sends, to the server 20, the correspondence between the construction information and the text indicating the places where the equipment is installed, specified by the construction information registrant 31.

In step 14 (S14), the server 20 stores the correspondence between the construction information and the installation information received in S13, in the memory part 204 of the server 20.

### <<Photographing process>>

In step 21 (S21), the server 20 sends the equipment installation information and the construction information linked with the installation information, to the photographing terminal 10. For example, the server 20 sends the installation information and the construction information with regard to the property information specified by the photographing terminal 10 (for example, the property name, the case name (construction name), etc.), to the photographing terminal 10.

In step 22 (S22), when installation information is selected, the photographing terminal 10 activates the camera function of the photographing terminal 10. Next, the photographing terminal 10 adds the construction information linked with the selected installation information, to the image of the construction object taken by the camera function.

In step 23 (S23), the photographing terminal 10 sends the image taken in S22, to the server 20.

In step 24 (S24), the server 20 stores the image received in S23, in the memory part 204 of the server 20. For example, when the image is stored in the memory part 204 of the server 20, the server 20 can report this to the evaluation terminal 40.

### <<Evaluation process>>

In step 31 (S31), the server 20 sends the image stored in the memory part 204 of the server 20, to the evaluation terminal 40. For example, the server 20 sends the image to the evaluation terminal 40 in response to a request from the evaluation terminal 40.

In step 32 (S32), the evaluation terminal 40 receives as input the evaluation result of the image received in S31. For example, the evaluation terminal 40 receives as input the result of evaluation by the image evaluator 41.

In step 33 (S33), the evaluation terminal 40 sends the evaluation result of S32 to the server 20. For example, when the evaluation result is stored in the memory part 204 of the server 20, the server 20 can report this to the photographing terminal 10.

In step 34 (S34), the server 20 reports the evaluation result received in S33 to the photographing terminal 10. For example, the server 20 reports the evaluation result (for example, a request for a retake) of the image to the photographing terminal 10 in response to a request from the photographing terminal 10.

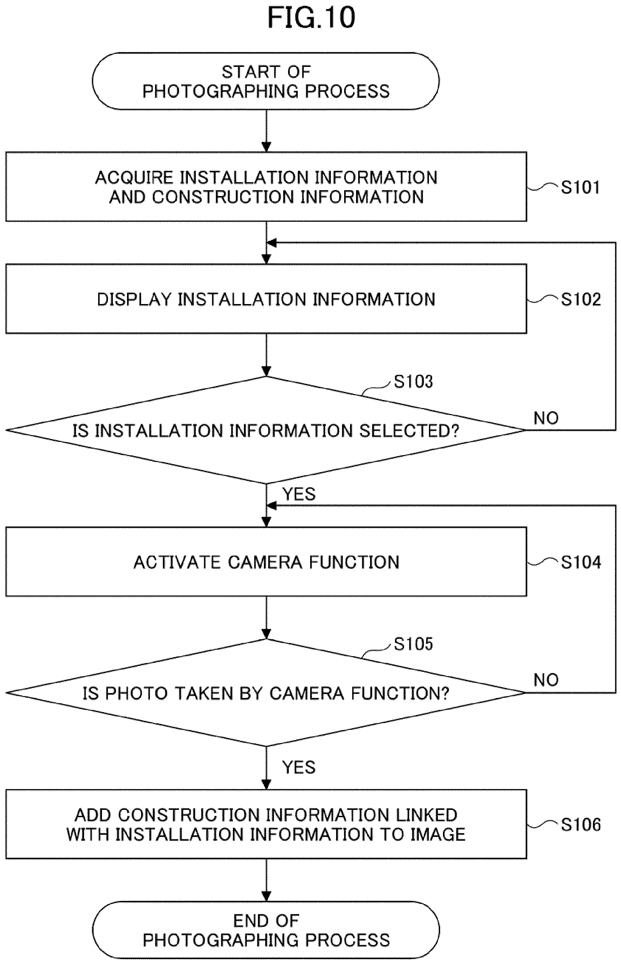

FIG. 10 is a flowchart of the photographing process according to one embodiment of the present disclosure. The following process is performed as the photographing terminal 10 executes a program (for example, a smartphone application) that one embodiment of the present disclosure provides. Assume that the program (for example, a smartphone application) is installed in the photographing terminal 10 in advance. For example, the photographing terminal 10 can acquire the URL (Uniform Resource Locator) of a site for downloading the program (for example, a smartphone application) via email registered as constructor information of the construction information.

In step 101 (S101), the information acquiring part 101 of the photographing terminal 10 acquires the equipment's installation information and the construction information linked with the installation information. For example, the information acquiring part 101 of the photographing terminal 10 receives the equipment's installation information and the construction information linked with the installation information, from the server 20.

Note that the information acquiring part 101 of the photographing terminal 10 may start acquiring the installation information and the construction information when the photographing terminal 10 reads a QR code (for example, a QR code distributed by the site managing person or the like at the site of construction). Alternatively, the information acquiring part 101 of the photographing terminal 10 may start acquiring the installation information and the construction information when the photographing terminal 10 arrives at the site of construction (for example, when GPS (Global Positioning System) and such location information of the photographing terminal 10 matches with the address of the construction site registered as property information of the construction information).

In step 102 (S102), the display part 104 of the photographing terminal 10 displays the installation information acquired in S101 on the display of the photographing terminal 10 or the like. For example, the display part 104 of the photographing terminal 10 displays a screen on which the places where the equipment is installed are indicated by locations on a plot plan (for example, icons on a plot plan). Alternatively, the display part 104 of the photographing terminal 10 displays a screen on which the places where the equipment is installed are indicated by text.

The display part 104 of the photographing terminal 10 can superimpose and display icons or the like that indicate the places where the equipment is installed, on the plot plan received from the server 20. Note that the server 20 may superimpose icons or the like that indicate the places where the equipment is installed on a plot plan.

In step 103 (S103), the activation part 102 of the photographing terminal 10 determines whether or not the installation information displayed in S102 is selected. For example, the activation part 102 of the photographing terminal 10 determines whether or not any of the locations (for example, icons) on the plot plan displayed in S102 is selected. Alternatively, the activation part 102 of the photographing terminal 10 determines whether or not any of the text displayed in S102 is selected. If the installation information is selected, the process proceeds to step 104. If no installation information is selected, the process returns to S102 and waits until the installation information is selected.

In step 104 (S104), the activation part 102 of the photographing terminal 10 activates the camera function of the photographing terminal 10 in response to the selection of the installation information in S103. For example, in the event installation information is selected, the activation part 102 makes the camera built in the photographing terminal 10 or the camera connected to the photographing terminal 10 ready to take a photo of the construction object (for example, equipment such as an air conditioner).

In step 105 (S105), the adding part 103 of the photographing terminal 10 determines whether or not a photo of the construction object has been taken by the camera function activated in S104 (that is, whether or not the shutter has been pressed). If a photo has been taken by the camera function, the process proceeds to step 106. If no photo has been taken by the camera function, the process returns to S104 and waits until a photo is taken by the camera function.

In step 106 (S106), the adding part 103 of the photographing terminal 10 adds the construction information linked with the installation information selected in S103, to the image taken by the camera function in S105. For example, the adding part 103 of the photographing terminal 10 adds the construction information as the image's metadata.

Note that the information acquiring part 101 of the photographing terminal 10 may acquire the installation information alone in S101, and acquire the construction information linked with that installation information when the installation information is selected in S103.

As described above, according to one embodiment of the present disclosure, it is possible to shorten the time for taking construction photos at the site of construction. Also, it is possible to prevent incorrect construction information from being added to the photographed images.

### <Hardware configuration>

FIG. 11 is a block diagram showing an example hardware structure of the photographing terminal 10, the server 20, the registration terminal 30 and the evaluation terminal 40 according to one embodiment of the present disclosure. The photographing terminal 10, the server 20, the registration terminal 30, and the evaluation terminal 40 include a CPU (Central Processing Unit) 1001, a ROM (Read Only Memory) 1002, and a RAM (Random Access Memory) 1003. The CPU 1001, the ROM 1002, and the RAM 1003 constitute what is known as a computer.

Furthermore, the photographing terminal 10, the server 20, the registration terminal 30, and the evaluation terminal 40 can include a secondary memory device 1004, a display device 1005, an operating device 1006, an I/F (Interface) device 1007, and a drive device 1008. Note that the hardware of the photographing terminal 10, the server 20, the registration terminal 30, and the evaluation terminal 40 are connected with each other via a bus B.

The CPU 1001 is an arithmetic-and-logic device that executes various programs installed in the secondary memory device 1004.

The ROM 1002 is a non-volatile memory. The ROM 1002 functions as a main memory device for storing various programs, data, and so forth that the CPU 1001 requires when executing various programs installed in the secondary memory device 1004. To be more specific, the ROM 1002 functions as a main memory device for storing, for example, boot programs such as BIOS (Basic Input/Output System), EFI (Extensible Firmware Interface), and so forth.

The RAM 1003 is a volatile memory such as a DRAM (Dynamic Random Access Memory), a SRAM (Static Random Access Memory), and so forth. The RAM 1003 functions as a main memory device to provide the work area that is expanded when various programs installed in the secondary memory device 1004 are executed on the CPU 1001.

The secondary memory device 1004 is a secondary memory device that stores various programs and information for use when various programs are executed.

The display device 1005 is a display device that displays the internal state of the photographing terminal 10, the server 20, the registration terminal 30, and the evaluation terminal 40.

The operating device 1006 is an input device to allow the administrator of the photographing terminal 10, the server 20, the registration terminal 30, and the evaluation terminal 40 to input various commands in the photographing terminal 10, the server 20, the registration terminal 30, and the evaluation terminal 40.

The I/F device 1007 is a communication device for connecting with the network and communicating with the photographing terminal 10, the server 20, the registration terminal 30, the evaluation terminal 40, and so forth.

The drive device 1008 is a device for setting up the recording medium 1009. The recording medium 1009 referred to here includes a medium on which information is recorded optically, electrically, or magnetically, such as a CD-ROM, a flexible disk, a magneto-optical disk, and so forth. Furthermore, the recording medium 1009 may include a semiconductor memory or the like that records information electrically, such as an EPROM (Erasable Programmable Read Only Memory), a flash memory, and so forth.

Note that various programs are installed on the secondary memory device 1004 by, for example, setting a distributed recording medium 1009 in the drive device 1008, and reading various programs recorded on this recording medium 1009 by means of the drive device 1008. Alternatively, various programs to be installed in the secondary memory device 1004 may be downloaded from the network via the I/F device 1007.

Note that, as described above, the camera built in the photographing terminal 10 or the camera connected to the photographing terminal 10 is used to take photos of the construction object (for example, equipment such as an air conditioner). That is, the photographing terminal 10 may be configured to have a built-in camera (that is, the photographing terminal 10 and the camera are formed as one device), or the photographing terminal 10 may be connected with a camera (that is, the photographing terminal 10 and the camera are formed as separate devices).

Although an embodiment of the present disclosure has been described in detail, the present disclosure is by no means limited to the specific examples described herein, and various variations and modifications can be made within the scope of the herein-contained claims.

This application is based on and claims priority to Japanese Patent Application No. 2020-035936, filed on March 3, 2020, the entire contents of which are incorporated herein by reference.

### [Reference Signs List]

1 construction management system
10 photographing terminal
11 photographer
20 server
30 registration terminal
31 construction information registrant
40 evaluation terminal
41 image evaluator
101 information acquiring part
102 activation part
103 adding part
104 display part
105 image transmission part
106 evaluation result receiving part
107 camera function control part
201 registration part
202 information providing part
203 evaluation part
204 memory part
301 registration part
401 evaluation part

## Claims

1. A program for causing a terminal to function as:
an information acquiring part configured to acquire
installation information including at least a place of installation of a construction object, and
construction information linked with the installation information;
an activation part configured to activate a camera function of the terminal when the installation information is selected; and
an adding part configured to add the construction information linked with the selected installation information to an image of the construction object taken by the camera function.

2. The program according to claim 1, wherein the place of installation is represented as a location on a plot plan.

3. The program according to claim 1, wherein the place of installation is represented as text.

4. The program according to any one of claims 1 to 3, wherein, when the installation information is selected, the information acquiring part acquires the construction information linked with the selected installation information.

5. The program according to any one of claims 1 to 4, further causing the terminal to function as a display part configured to display at least part of the construction information on a screen of the camera function in a changeable manner.

6. The program according to claim 5, wherein the display part displays the construction information at a location on the screen determined based on whether or not the terminal needs to be operated.

7. The program according to any one of claims 1 to 6, further causing the terminal to function as an image transmission part configured to send an image of the construction object, which is taken by the camera function and to which the construction information is added by the adding part, to the server, as data for use in a construction report.

8. The program according to claim 7, further causing the terminal to function as an evaluation result receiving part configured to receive an evaluation result determined with regard to the image saved in the server.

9. The program according to any one of claims 1 to 8, wherein the information acquiring part acquires the construction information registered with the server in advance, from the server.

10. The program according to any one of claims 1 to 9,
wherein the construction object is equipment, and
wherein the program further causes the terminal to function as a camera function control part configured to control the camera function to identify the equipment and place a focus on the equipment.

11. The program according to any one of claims 1 to 9,
wherein the construction object is equipment, and
wherein the program further causes the terminal to function as a camera function control part configured to control the camera function to display a line for determining a location of the equipment on a screen of the camera function.

12. The program according to any one of claims 1 to 9,
wherein the construction object is equipment, and
wherein the program further causes the terminal to function as a camera function control part configured to control the camera function to identify and start photographing the equipment.
